# EUROPEAN PATENT APPLICATION

(11) **EP 4 782 662 A1**
(43) Date of publication of application: **29.07.2026**
(21) Application number: 26150042.5
(22) Date of filing: 02.01.2026
(51) Int. Cl.: F01D 21/00, F01D 25/28, G01M 15/14

(54) **TOOL FOR TURBINE ROTOR THRUST CLEARANCE TEST**

(30) Priority: 23.01.2025 US 202519034778
(71) Applicant: GE Vernova Technology GmbH, 5400 Baden (CH)
(72) Inventor: MCMANUS, Kelly Anne, Greenville, 29615 (US); MOGLE, II Thomas Alan, Greenville, 29615 (US); STEADMAN, Mark Timothy, Duncan, 29334 (US)
(74) Representative: Freigutpartners IP Law Firm

(57) **Abstract**

A tool (200) for thrust clearance testing a turbine rotor includes at least one turbine rotor thrust engagement element (220). Each engagement element includes an adjustable clamp (230) including a first engagement member (232), a second engagement member (234), and a space adjuster (236) configured to adjust a distance (D) between the first and second engagement members. The first and second engagement members are configured to engage opposing axial ends of coupling flange(s) (202, 204) of a load coupling (120) extending from at least the turbine rotor (110). The tool also includes a dual-action linear actuator (260) coupled to the adjustable clamp and having an actuator end (262), and a fixture (270) configured to axially fix the actuator end of the actuator to a stationary structure (272) adjacent the turbine rotor. A controller (300) is configured to activate the actuator of each engagement element to move the turbine rotor between a first axial direction (Al) and a second axial direction (A2) opposite to the first axial direction.

## Description

### TECHNICAL FIELD

The disclosure relates generally to turbomachinery. More specifically, the herein claimed invention relates to the subject matter described in the appended claims.

### BACKGROUND

Turbomachinery, such as gas turbine (GT) systems, include a turbine rotor through which rotary kinetic energy is transmitted. More particularly, GT systems include a compressor section operatively coupled to a turbine section through a combustion section. A compressed airflow from the compressor section is mixed with a fuel in the combustion section to form a combustible mixture. The combustible mixture is directed to the turbine section where it expands along a hot gas path through a number of turbine stages acting upon turbine airfoils coupled to the turbine rotor to create work that is output, for example, to power a load such as a generator. A load coupling couples the turbine rotor to another, adjacent load rotor, such the rotor of a generator. The load coupling includes a turbine rotor flange extending radially from an axial end of the turbine rotor and a load rotor flange extending radially from an axial end of the load rotor. The two flanges are fastened together to couple the rotors.

During maintenance of GT systems, clearance tests of various structures coupled to, supporting or around the turbine rotor must be performed, e.g., at the beginning and end of GT system outages. One clearance test includes a turbine rotor thrust clearance test (hereafter "rotor thrust test" for brevity) in which the turbine rotor is thrust along its axis to a position it will occasionally obtain when operating to ensure adequate clearances are present. The relevant clearances may include, for example, radial clearance of blade tips in the compressor and/or the turbine with an inner surface of an adjacent casing, and radial clearance of thrust bearing pads for the rotor.

A rotor thrust test requires a rotor thrust tool to impart an axial force to the turbine rotor. Current rotor thrust tools used to perform the rotor thrust test suffer from a wide variety of shortcomings. When used in the field, current rotor thrust tools require time-consuming and expensive disassembly of parts of the GT system, most notably, the load coupling, to expose the axial end for engagement by the rotor thrust tool. Once disassembled, certain thrust tools may couple to a forward or aft bearing housing around the turbine rotor and extend through a fastener opening in the turbine rotor flange. This approach may damage the sensitive bearing housings or the bearings therein. The tool only engages the axial end in a manner to force the rotor in one direction, resulting in a limited evaluation of clearances.

Mounting rotor thrust tools can also be physically complicated. For example, some thrust tools use a large, heavy U-shaped mount to couple to the axial end of the turbine rotor and to both sides of either a bearing housing or the inlet casing around the turbine rotor. This approach is time-consuming and complicated to implement and risks damaging the inlet casing or the bearing housing (especially where a bearing is integral with the bearing housing). This approach, like other varieties of thrust tools, also requires a crane to install and has limited application to only a small number of larger GT systems. In some cases, the limited space available around GT systems, their intact casing and their turbine rotors, make using a crane impossible.

Current rotor thrust tools are also not adaptable to different GT systems. Another disadvantage of current rotor thrust tools is that they oftentimes require rotating the turbine rotor to position the tool for use. This is difficult for a number of reasons including, for example, the rotor's size and weight and unavailability of equipment used to rotate it. In some cases, the turbine rotor cannot be rotated, for example, because the load rotor coupled to it is rotationally locked.

### BRIEF DESCRIPTION

The herein claimed invention related to the subject matter set forth in the appended claims. Aspects of the herein claimed subject matter and of related, currently non-claimed subject matter, are set forth in the aspects described below. All aspects, examples and features mentioned below can be combined in any technically possible way.

An aspect of the disclosure provides a tool for thrust testing a first rotor. The first rotor may be a turbine rotor. The tool comprises: at least one rotor thrust engagement element, each rotor thrust engagement element including: an adjustable clamp including a first engagement member, a second engagement member, and a space adjuster configured to adjust a distance between the first engagement member and the second engagement member, wherein the first and second engagement members are configured to engage opposing axial ends of at least one coupling flange of a load coupling extending from at least the first rotor and configured to couple the first rotor to a second rotor; a dual-action linear actuator coupled to the adjustable clamp and having an actuator end; and a fixture configured to axially fix the actuator end of the dual-action linear actuator to a stationary structure adjacent the first rotor; and a controller configured to activate the dual-action linear actuator of each rotor thrust engagement element to move the first rotor between a first axial direction and a second, opposite axial direction to the first axial direction, or, to move the first rotor selectively in a first axial direction and in a second, opposite axial direction to the first axial direction, respectively. The first rotor may be a turbine rotor and the second rotor may be a load rotor. In the description below, the first rotor may be referred to as the turbine rotor and the second rotor may be referred to as the load rotor.

Another aspect of the disclosure includes any of the preceding aspects and/or any of the appended claims, and the at least one rotor thrust engagement element includes a plurality of rotor thrust engagement elements circumferentially spaced relative to the first rotor, or configured to be circumferentially spaced relative to the first rotor, respectively.

Another aspect of the disclosure includes any of the preceding aspects and/or any of the appended claims, and the coupling flange of the load coupling includes a turbine rotor flange extending from the turbine rotor and a load rotor flange extending from the load rotor, wherein the turbine rotor flange and the load rotor flange are configured to be coupled together.

Another aspect of the disclosure includes any of the preceding aspects and/or any of the appended claims, and, in an operative state of the adjustable clamp, the first engagement member engages the axial end of the turbine rotor flange and the second engagement member engages the axial end of the load rotor flange.

Another aspect of the disclosure includes any of the preceding aspects and/or any of the appended claims, and the load rotor flange and the turbine rotor flange have aligned fastener openings extending axially therethrough relative to the turbine rotor, wherein the first engagement member engages a portion of the fastener opening in the turbine rotor flange and the second engagement member engages a portion of the fastener opening in the load rotor flange.

Another aspect of the disclosure includes any of the preceding aspects and/or any of the appended claims, and each of the aligned fastener openings have a circular inner surface, and the first engagement member includes a first retention member to engage a portion of the circular inner surface of the fastener opening in the turbine rotor flange and the second engagement member includes a second retention member to engage a portion of the circular inner surface of the fastener opening in the load rotor flange.

Another aspect of the disclosure includes any of the preceding aspects and/or any of the appended claims, and the load coupling includes a fastener in the aligned fastener openings coupling the turbine rotor flange and the load rotor flange, wherein the first retention member and the second retention member are configured to be radially between a portion of the fastener and the respective portions of the circular inner surfaces of the fastener openings.

Another aspect of the disclosure includes any of the preceding aspects and/or any of the appended claims, and the adjustable clamp extends around a radially outer facing surface of the at least one coupling flange of the load coupling.

Another aspect of the disclosure includes any of the preceding aspects and/or any of the appended claims, and the fixture includes: a body having a curved opening defined therein; a curved slot extending along the curved opening configured to receive the actuator end of the dual-action linear actuator; and a retention element slidable along the curved opening and axially retained by the body, the retention element including a slot configured to engage the actuator end of the dual-action linear actuator to axially fix the actuator end of the dual-action linear actuator relative to the stationary structure

Another aspect of the disclosure includes any of the preceding aspects and/or any of the appended claims, and the at least one coupling flange of the load coupling has a circular outer surface, and wherein the curved opening and the curved slot extending along the curved opening of the fixture parallel the circular outer surface.

Another aspect of the disclosure includes any of the preceding aspects and/or any of the appended claims, and the actuator end of the dual-action linear actuator includes a radially extending slot therein, and the slot of the retention element engages in the radially extending slot to axially fix the actuator end of the dual-action linear actuator relative to the stationary structure.

Another aspect of the disclosure includes any of the preceding aspects and/or any of the appended claims, and the retention element includes at least one spring-loaded ball plunger extending into the slot defined therein and configured to retain the retention element on the actuator end of the dual-action linear actuator.

Another aspect of the disclosure includes any of the preceding aspects, and the fixture is fixedly mounted to the stationary structure by a plurality of removable threaded fasteners.

Another aspect of the disclosure includes any of the preceding aspects and/or any of the appended claims, and the space adjuster includes a threaded member configured to linearly adjust the distance between the first engagement member and the second engagement member.

Another aspect of the disclosure includes any of the preceding aspects and/or any of the appended claims, and the controller is further configured to activate the dual-action linear actuator of each rotor engagement element to move the turbine rotor from a nominal axial position in the first axial direction and back, and from the nominal axial position to the second, opposite axial direction to the first axial direction and back.

Another aspect of the disclosure includes any of the preceding aspects and/or any of the appended claims, and the stationary structure includes a lower inner half casing of a turbine in which the turbine rotor operates.

Another aspect of the disclosure includes any of the preceding aspects and/or any of the appended claims, and the at least one coupling flange of the load coupling includes a turbine rotor flange extending from the turbine rotor, wherein, in an operative state of the adjustable clamp, the first engagement member engages a first axial end of the turbine rotor flange and the second engagement member engages a second axial end of the turbine rotor flange. Still another aspect of the disclosure includes any of the preceding aspects and/or any of the appended claims, wherein the adjustable clamp is configured such that the first engagement member is configured to engage a first axial end of a turbine rotor flange and the second engagement member is configured to engage a second axial end of a turbine rotor flange.

Another aspect of the disclosure includes a tool for thrust testing a first rotor configured to couple to a second rotor, the tool comprising: at least one first rotor thrust engagement element, each first rotor thrust engagement element including: an adjustable clamp including a first engagement member, a second engagement member, and a space adjuster configured to adjust a distance between the first engagement member and the second engagement member, wherein the first and second engagement members are configured to engage opposing axial ends of at least one coupling flange of a load coupling extending from at least the first rotor, and wherein the adjustable clamp extends around a radially outer facing surface of the at least one coupling flange of the load coupling; a dual-action linear actuator coupled to the adjustable clamp and having an actuator end; and a fixture configured to axially fix the actuator end of the dual-action linear actuator to a stationary structure adjacent the first rotor; and a controller configured to activate the dual-action linear actuator of each first rotor thrust engagement element to move the first rotor between a first axial direction and a second, opposite axial direction to the first axial direction.

Another aspect of the disclosure includes any of the preceding aspects and/or any of the appended claims, and the at least one first rotor thrust engagement element includes a plurality of first rotor thrust engagement elements circumferentially relative to the first rotor.

Another aspect of the disclosure includes any of the preceding aspects and/or any of the appended claims, and the coupling flange of the load coupling includes a first rotor flange extending from the first rotor and a second rotor flange extending from the second rotor, wherein the first rotor flange and the second rotor flange are configured to be coupled together, wherein, in an operative state of the adjustable clamp, the first engagement member engages the axial end of the first rotor flange and the second engagement member engages the axial end of the second rotor flange.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative gas turbine system for which a tool for performing a rotor thrust test according to embodiments of the disclosure can be used;
FIG. 2 shows a cross-section view of an illustrative turbine assembly with four stages that may be used with the turbomachine in FIG. 1;
FIG. 3 shows a side perspective view of a tool for performing a rotor thrust test on a turbine rotor according to embodiments of the disclosure;
FIG. 4 shows a lower perspective view of a tool for performing a rotor thrust test according to embodiments of the disclosure;
FIG. 5 shows a side view of a tool for performing a rotor thrust test according to embodiments of the disclosure;
FIG. 6 shows a perspective view of a load coupling from an opposite direction shown in FIGS. 3 and 4 with a tool for performing a rotor thrust test according to embodiments of the disclosure;
FIG. 7 shows a schematic end view of a load coupling with two engagement elements of a tool for performing a rotor thrust test according to embodiments of the disclosure;
FIG. 8 shows an exploded perspective view of an engagement element of a tool for performing a rotor thrust test according to embodiments of the disclosure;
FIG. 9A shows an end view of engagement members of an adjustable clamp of a tool for performing a rotor thrust test at axial ends of coupling flange(s) of a load coupling (without a fastener) according to embodiments of the disclosure;
FIG. 9B shows a cross-sectional view along view line 9B-9B in FIG. 9A;
FIG. 10A shows an end view of engagement members of an adjustable clamp of a tool for performing a rotor thrust test at axial ends of coupling flange(s) of a load coupling (with a fastener) according to embodiments of the disclosure;
FIG. 10B shows a cross-sectional view along view line 10B-10B in FIG. 10A;
FIG. 11 shows a cross-sectional view of a fixture with a retention element thereof according to embodiments of the disclosure;
FIG. 12 shows an enlarged cross-sectional view of the fixture and a curved opening thereof with a retention element therein according to embodiments of the disclosure;
FIG. 13 shows an end view of a load coupling with an engagement element of a tool for performing a rotor thrust test being installed according to embodiments of the disclosure; and
FIG. 14 shows a side view of a tool for performing a rotor thrust test according to other embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a turbomachine. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbomachine or, for example, the flow of air through the combustor or coolant through one of the turbomachine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the turbomachine, and "aft" referring to the rearward or turbine end of the turbomachine.

It is often required to describe parts that are at different radial positions with regard to a center axis. The term "axial" refers to movement or position parallel to an axis, e.g., an axis of a turbine rotor. The term "radial" refers to movement or position perpendicular to an axis, e.g., an axis of a turbine rotor. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., around a rotor flange on a turbine rotor. As indicated above, it will be appreciated that such terms may be applied in relation to the axis of the turbine rotor of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a tool for thrust clearance testing a turbine rotor. The tool includes at least one turbine rotor thrust engagement element. Each turbine rotor thrust engagement element includes an adjustable clamp including a first engagement member, a second engagement member, and a space adjuster configured to adjust a distance between the first engagement member and the second engagement member. The first and second engagement members are configured to engage opposing axial ends of at least one coupling flange of a load coupling extending from at least the turbine rotor and configured to couple the turbine rotor to a load rotor. The tool also includes a dual-action linear actuator coupled to the adjustable clamp and having an actuator end, and a fixture configured to axially fix the actuator end of the dual-action linear actuator to a stationary structure adjacent the turbine rotor. A controller is configured to activate the dual-action linear actuator of each turbine rotor thrust engagement element to move the turbine rotor between a first axial direction and a second, opposite axial direction to the first axial direction.

The tool provides a number of advantages, examples of which follow. The tool is easy and safe to use and only requires one person to lift. The tool also provides a standardized way to perform a turbine rotor thrust clearance test. The tool enables the turbine rotor to be thrust in forward and aft axial directions, with the inlet casing installed or uninstalled, and with a single tool installation for numerous test procedures. While the tool can be used when the turbine rotor is uncoupled, the tool can also be installed around both coupling flanges of the load coupling, i.e., on turbine rotor and load rotor flanges, while they are coupled. Hence, the tool eliminates the need to disassemble the load coupling or even remove loading coupling fasteners. The adjustable clamp is usable in any rotational position around the turbine rotor, eliminating the need to rotate the turbine rotor.

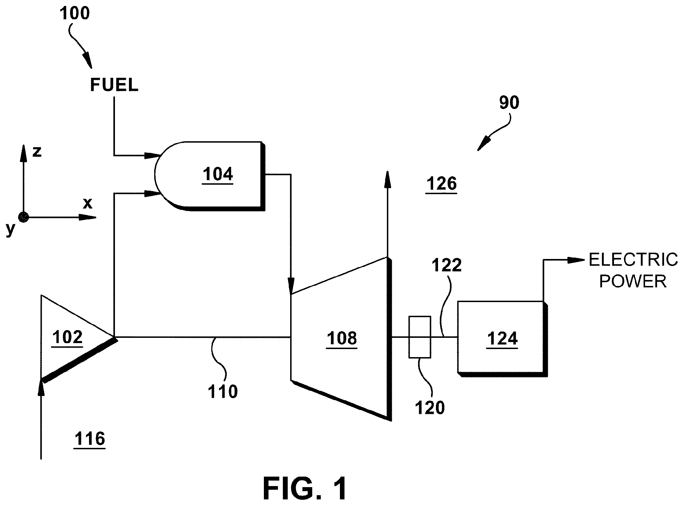

Referring to the drawings, FIG. 1 is a schematic view of an illustrative non-limiting turbomachine 90 in the form of a combustion turbine or gas turbine (GT) system 100 (hereinafter, "GT system 100"). GT system 100 includes a compressor 102 and a combustor 104. GT system 100 also includes a turbine 108 and a turbine rotor 110. As will be described, turbine rotor 110 may extend through turbine 108 or may take the form of a common compressor/turbine rotor 110 that extends through turbine 108 and compressor 102. As understood in the field, turbine rotor 110 may be coupled using a load coupling 120 to a rotor 122 of a load 124, such as a generator.

The present disclosure is not limited to application on any one particular GT system 100 and may be implemented in connection with other GE Vernova, Cambridge, MA, USA, engines including, and engine models of other companies. Further, the teachings of the disclosure are not necessarily applicable to only a GT system and may be applied to other types of turbomachines, e.g., steam turbines, jet engines, compressors, etc.

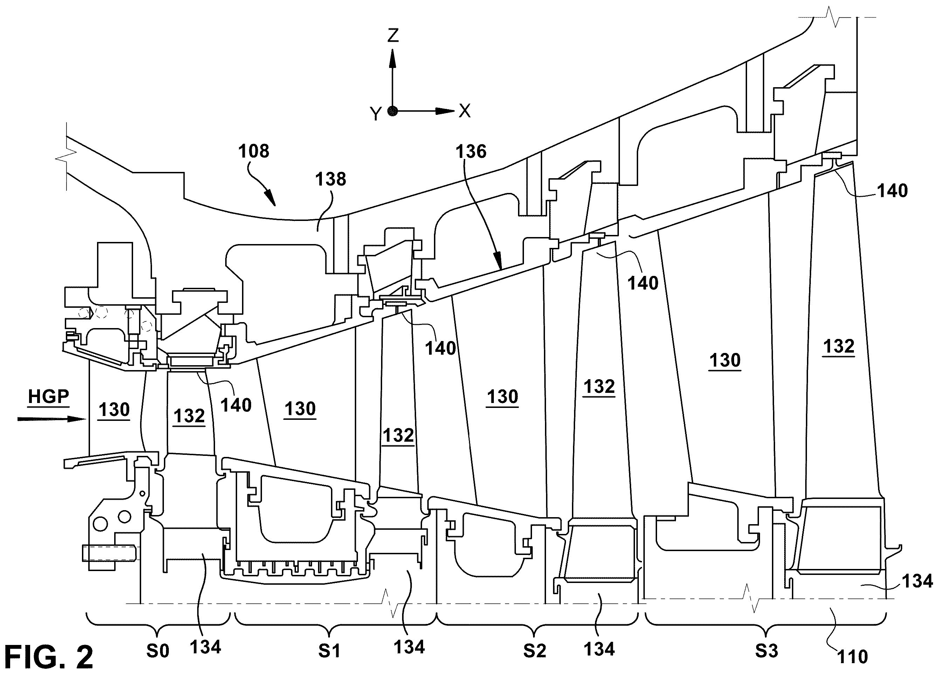

FIG. 2 shows a cross-section view of an illustrative non-limiting portion of turbine 108 with four stages S0-S3 that may be used with GT system 100 in FIG. 1. The four stages are referred to as S0, S1, S2, and S3. Stage S0 is the first stage and is the smallest (in a radial direction) of the four stages. Stage S1 is the second stage and is the next stage in an axial direction. Stage S2 is the third stage and is the next stage in an axial direction. Stage S3 is the fourth, last stage and is the largest (in a radial direction). It is to be understood that four stages are shown as one non-limiting example only, and each turbine may have more or fewer than four stages. A set of stationary vanes or nozzles 130 cooperate with a set of rotating blades 132 to form each stage S0-S3 of turbine 108 and to define a portion of a flow path through turbine 108. Rotating turbine blades 132 in each set are coupled to a respective rotor wheel 134 that couples them circumferentially to turbine rotor 110 (FIG. 1). That is, a plurality of rotating turbine blades 132 are mechanically coupled in a circumferentially spaced manner to each rotor wheel 134. A static blade section 136 includes the stationary nozzles 130 circumferentially spaced around turbine rotor 110. Each nozzle 130 is coupled to a stationary casing 138 of turbine 108.

In operation, air flows through compressor 102, and compressed air is supplied to combustor 104. Specifically, the compressed air is supplied to a fuel nozzle assembly (not shown) that is integral to combustor 104. The fuel nozzle assembly is also in flow communication with a fuel source (not shown in FIG. 1) and channels fuel and air to combustor 104. Combustor 104 ignites and combusts fuel. Combustor 104 is in flow communication with turbine 108 within which gas stream thermal energy is converted to mechanical rotational energy. Turbine 108 is rotatably coupled to and drives turbine rotor 110. Compressor 102 may also be rotatably coupled to turbine rotor 110. In the illustrative embodiment, there is a plurality of combustors 104 and fuel nozzle assemblies (not shown). At least one end of rotating turbine rotor 110 may extend axially away from turbine 108 (or compressor 102) and may be attached to a load 124, such as, but not limited to, machinery, a generator, a load compressor, and/or another turbine.

During manufacture of turbine 108 and/or during maintenance outages, certain testing measures the clearances of turbine rotor 110 for compliance with design tolerances. As noted, one clearance test includes a turbine rotor thrust clearance test (hereafter "rotor thrust test" for brevity) in which turbine rotor 110 is thrust along its axis (X-direction in FIGS. 1-2) to a position it will occasionally obtain when operating to ensure adequate clearances are present. The relevant clearances may include, for example, radial clearance of blade tips 140 (FIG. 2) in turbine 108 with an inner surface of an adjacent stationary casing 138. Similar clearance tests can be made for blade tips in compressor 102 (FIG. 1) where turbine rotor 110 extends therethrough. Another example clearance includes a radial clearance of thrust bearing pads (not shown) for turbine rotor 110.

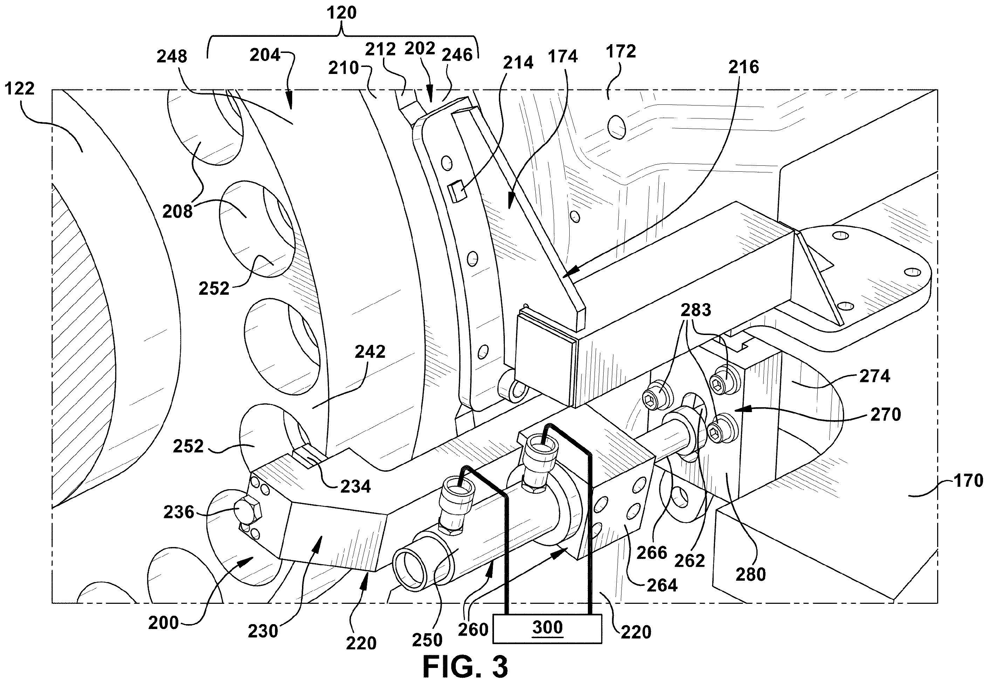

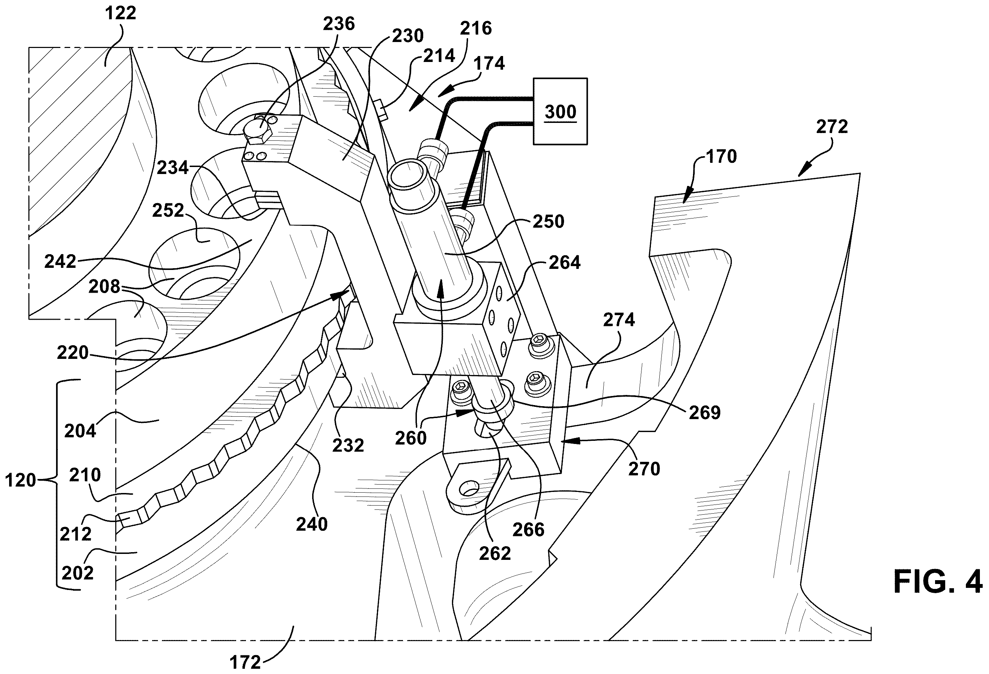

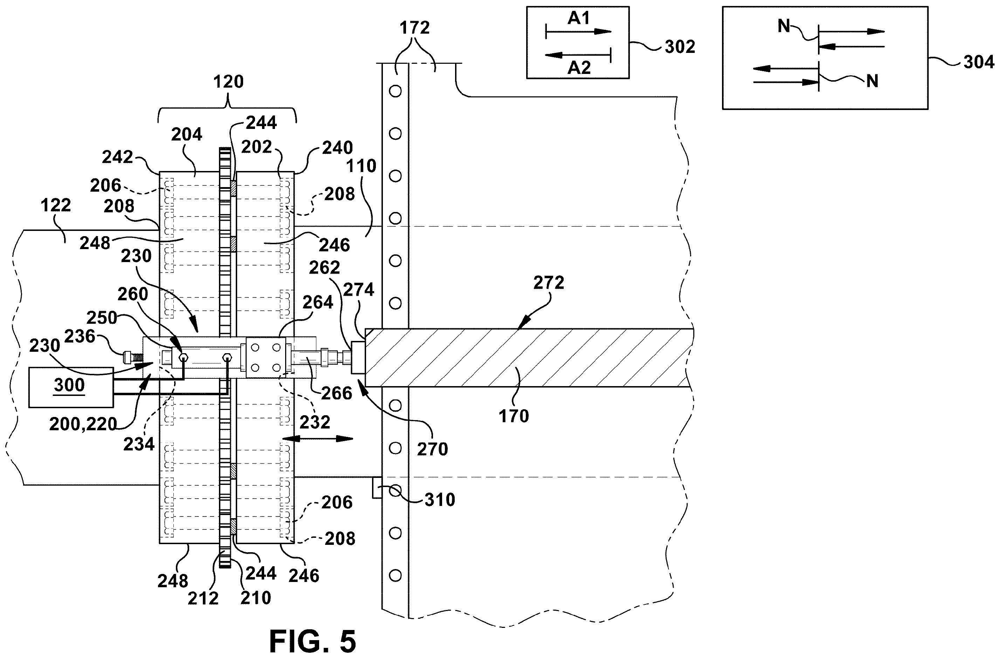

FIG. 3 shows a side perspective view, FIG. 4 shows a lower perspective view, and FIG. 5 shows a side view of a tool 200 for performing a rotor thrust test on turbine rotor 110 (FIG. 5). FIGS. 3-5 show turbine rotor 110 positioned within a lower half casing 170 with a bearing housing 172 still attached around an upper half of turbine rotor 110. Lower half casing 170 may be joined to an upper half casing (not shown), which may also be joined to downstream stationary casings 138 (FIG 2). Bearing housing 172 includes any variety of bearings for rotationally supporting turbine rotor 110. As will be described, FIGS. 3-4 also show an optional speed pickup sensor system 174.

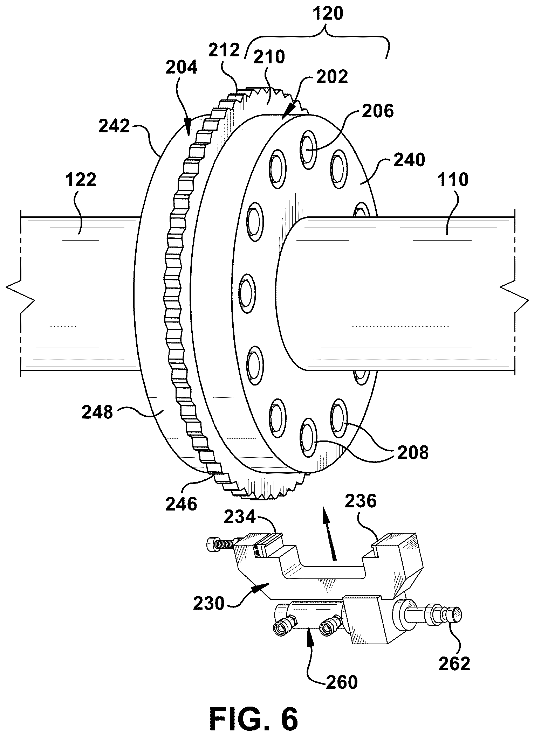

Turbine rotor 110 is coupled to another rotor 122 (hereafter referenced as "load rotor 122") by a load coupling 120. FIG. 6 shows a perspective view of load coupling 120 from an opposite direction as shown in FIGS. 3 and 4 with half casing 170 and bearing housing 172 removed for illustration purposes. Load coupling 120 includes a turbine rotor flange 202 coupled to or integral with turbine rotor 110, and a load rotor flange 204 coupled to or integral with load rotor 122. Turbine rotor flange 202 and load rotor flange 204 extend radially from their respective rotors 110, 122. That is, in certain embodiments, coupling flange(s) of load coupling 120 may include turbine rotor flange 202 extending from turbine rotor 110 and load rotor flange 204 extending from load rotor 122. Turbine rotor flange 202 and load rotor flange 204 are configured to be coupled together as part of load coupling 120. That is, in operation, rotor flanges 202, 204 are fastened together to form load coupling 120. In certain embodiments, flanges 202, 204 may be fastened together by a plurality of fasteners 206 positioned within (axially and radially) aligned fastener openings 208. Fasteners 206 may include any now known or later developed removable industrial threaded fasteners such as nuts/bolt sets. In one non-limiting example, fasteners 206 may be tensioning nuts/bolt sets. FIGS. 3 and 4 show fastener openings 208 without fasteners 206, and FIGS. 5 and 6 show fastener openings 208 with fasteners 206 therein. As will be described, tool 200 is advantageously applicable to either setting.

In certain embodiments, as shown in FIGS. 3 and 4, speed pickup sensor system 174 may optionally be provided. Speed pickup sensor system 174 includes a speed sensor pickup wheel 210 positioned and held between flanges 202, 204. As understood in the field, speed sensor pickup wheel 210 has an undulating outer surface 212 (e.g., ribbed) from which a sensor 214 on a sensor holder 216 can measure the rotational speed of turbine rotor 110. Sensor holder 216 may be fastened to, for example, lower half casing 170. Speed pickup sensor system 174 is optional during use of the tool.

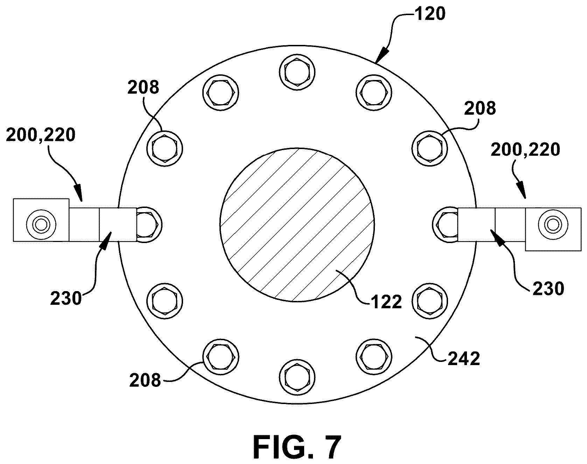

Tool 200 includes at least one turbine rotor thrust engagement element 220. In certain embodiments, a single turbine rotor thrust engagement element 220 may be used, but, more likely, a plurality of turbine rotor thrust engagement elements 220 are used. Use of a plurality of turbine rotor thrust engagement elements 220 (hereafter "engagement elements 220" for brevity) allows for axial forces to be applied in an even manner around turbine rotor 110, and accurate axial movement of larger turbine rotors 110. FIG. 7 shows a schematic end view of load coupling 120 with two engagement elements 220 circumferentially spaced relative to turbine rotor 110. Where a plurality of turbine rotor thrust engagement elements 220 are used, they may be circumferentially spaced relative to turbine rotor 110. In the example shown, two engagement elements 220 are shown, but any number that can be safely mounted around load coupling 120 can be used, e.g., three or more for larger turbine rotors 110.

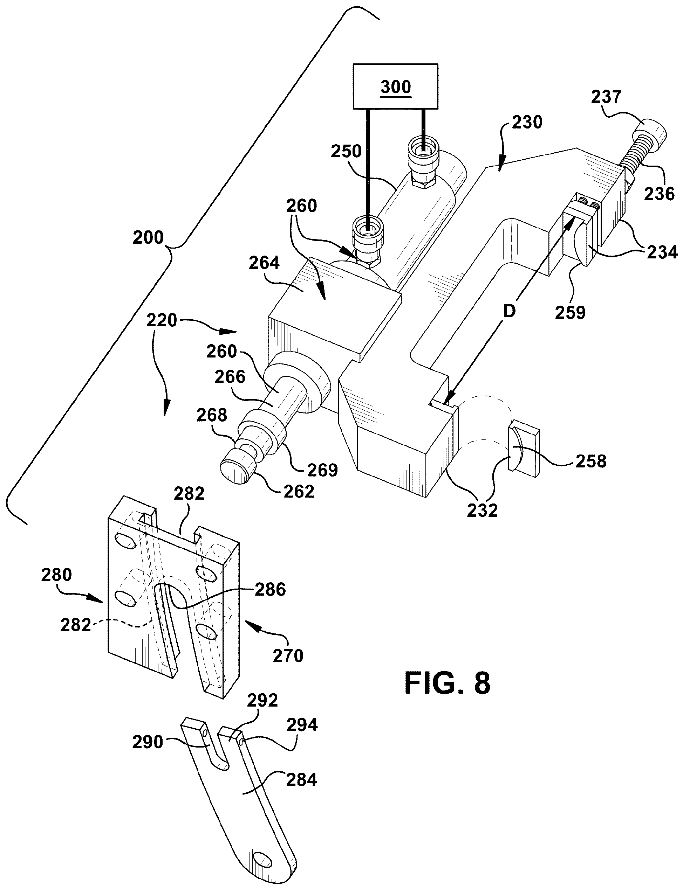

FIG. 8 shows an exploded perspective view of an engagement element 220 according to embodiments of the disclosure. Each engagement element 220 includes an adjustable clamp 230 including a first engagement member 232, a second engagement member 234, and a space adjuster 236 configured to adjust a distance D between first engagement member 232 and second engagement member 234. As shown in FIGS. 3-5, first and second engagement members 232, 234 are configured to engage opposing axial ends 240, 242 of one or more coupling flanges (e.g., turbine rotor and load rotor flange(s) 202, 204) of load coupling 120 extending from at least turbine rotor 110. As noted, rotor flanges 202, 204 are configured to couple turbine rotor 110 to load rotor 122.

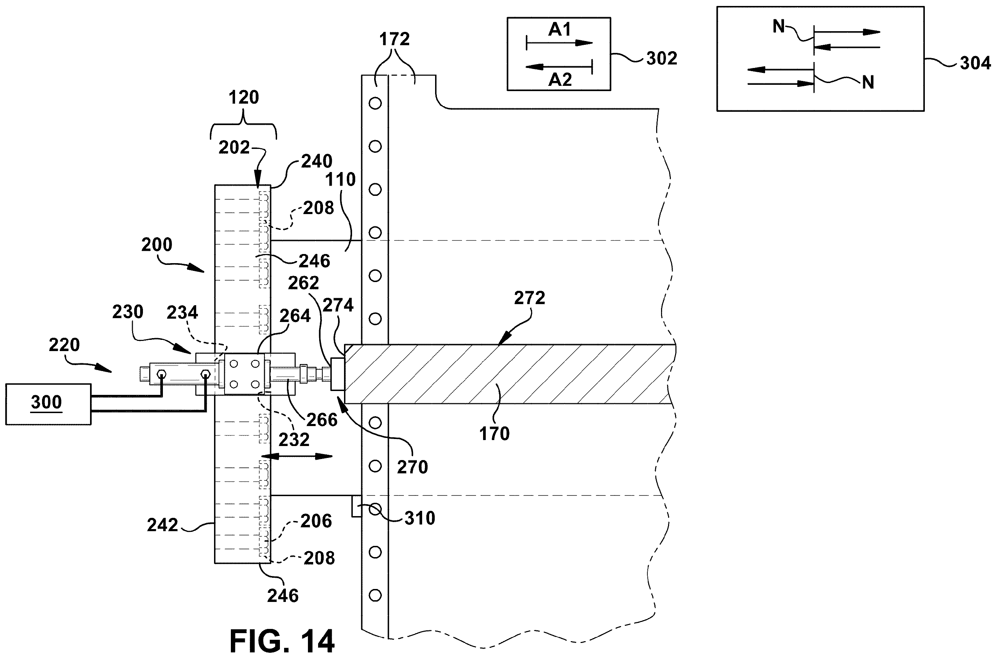

In FIGS. 3-5, engagement element 220 is illustrated in an operative position where both rotor flanges 202, 204 of load coupling 120 are present. That is, load coupling 120 includes both turbine rotor flange 202 adjacent to load rotor flange 204, perhaps with speed sensor pickup wheel 210 therebetween. In this setting, as shown in FIG. 6, turbine rotor flange 202 may be fastened to load rotor flange 204 with fasteners 206. In this setting, tool 200 can be advantageously used without disassembling load coupling 120. Alternatively, as shown in FIG. 5, fasteners 206 may be removed from fastener openings 208. This arrangement may be used, for example, where turbine rotor 110 and load rotor 122 are decoupled during maintenance. Load coupling 120 may also be disassembled, for example, before coupling of rotors 110, 122 during manufacturing or initial install, or where more extensive maintenance work is being conducted on load 124 (FIG. 1) in the field, requiring removal of load rotor 122 but not turbine rotor 110. Where fasteners 206 are removed and turbine rotor 110 and load rotor 122 are decoupled (as is known in the art and shown in FIG. 5) spacer(s) 244 may be inserted between parts of load coupling 120 to maintain a fixed distance between axial ends 240, 242 of one or more rotor flanges 202, 204 of load coupling 120. More particularly, spacer(s) 244 may be inserted between turbine rotor flange 202 and load rotor flange 204. Alternatively, spacer(s) 244 may be between turbine rotor flange 202 and wheel 210 (shown in FIG. 5) and/or between load rotor flange 204 and wheel 210. As will be described herein relative to FIG. 14, in other embodiments, where load coupling 120 is disassembled, tool 200 may be applied to only one coupling flange, i.e., turbine rotor flange 202 of turbine rotor 110.

Rotor flanges 202, 204 have radially outer circular surfaces 246, 248. In an operative position, adjustable clamp 230 has a body 250 that extends along outer circular surfaces 246, 248 in an axial direction to position first and second engagement members 232, 234. Engagement members 232, 234 extend radially inward relative to body 250 to engage opposing axial ends 240, 242 of one or more coupling flanges (e.g., rotor flange(s) 202, 204) of load coupling 120. In this manner, adjustable clamp 230 extends around a radially outer facing surface, i.e., radially outer circular surfaces 246, 248, of at least one coupling flange (e.g., rotor flange(s) 202, 204) of load coupling 120. More particularly, body 250 and first and second engagement members 232, 234 are sized so first and second engagement members 232, 234 can fit over axial ends 240, 242 of the desired rotor flange(s) 202, 204.

During installation of each engagement element 220, space adjuster 236 has first and second engagement members 232, 234 at a distance D (FIG. 8) sufficient to fit over axial ends 240, 242 of the desired rotor flange(s) 202, 204. Once in position, space adjuster 236 can selectively move first and second engagement members 232, 234 closer together to fixedly engage first and second engagement members 232, 234 with opposing axial ends 240, 242 of one or more coupling flanges (e.g., rotor flange(s) 202, 204) of load coupling 120. In an operative state of adjustable clamp 230, first engagement member 232 engages axial end 240 of turbine rotor flange 202 and second engagement member 234 engages axial end 242 of load rotor flange 204.

Space adjuster 236 may include any now known or later developed mechanism to change a distance D (FIG. 8) between engagement members in a clamp. In the example shown, space adjuster 236 includes a threaded member 237 configured to linearly adjust distance D between first engagement member 232 and second engagement member 234. In the example, threaded member 237 is threadedly received in body 250 and coupled to, or engaged to, one or more of engagement members 232, 234 (234 shown) to linearly adjust distance D between engagement members 232, 234. Threaded member 237 can be adjusted using any appropriate tool such as a wrench, a screwdriver, etc. Space adjuster 236 provides sufficient force on engagement members 232, 234 to hold tool 200 to rotor flange(s) 202, 204 during application of force(s) to axially thrust turbine rotor 110. It is recognized that space adjuster 236 may include a variety of other linear position adjusting systems, which are considered within the scope of the disclosure. Other options for space adjuster 236 include but are not limited to: ratchet systems, gear systems such as worm gears or rack/pinion gears, or linear actuators (hydraulic, pneumatic, electric).

As noted, adjustable clamp 230 includes first and second engagement members 232, 234 that are configured to engage opposing axial ends 240, 242 of one or more coupling flanges (e.g., rotor flange(s) 202, 204) of load coupling 120. Adjustable clamp 230 can engage opposing axial ends 240, 242 at any circumferential location thereof. While not necessary in all cases, first and second engagement members 232, 234 may include additional material from just that of body 250 of adjustable clamp 230. In any event, first and second engagement members 232, 234 may include any now known or later developed material capable of engaging the metal or metal alloy surfaces of rotor flange(s) 202, 204, e.g., rubber, polymer, soft metal or metal alloy, etc. Further, first and second engagement members 232, 234 may be configured to engage rotor flange(s) 202, 204 at respective fastener openings 208. As used herein, "engage at" respective fastener openings 208 means engagement members 232, 234 contact, grasp, grab and/or hold coupling flange(s) (e.g., rotor flange(s) 202, 204) adjacent to or within fastener openings 208. As noted, load rotor flange 204 and turbine rotor flange 202 have aligned fastener openings 208 extending axially therethrough relative to turbine rotor 110. As shown in FIGS. 3-6, each of aligned fastener openings 208 have a circular inner surface 252.

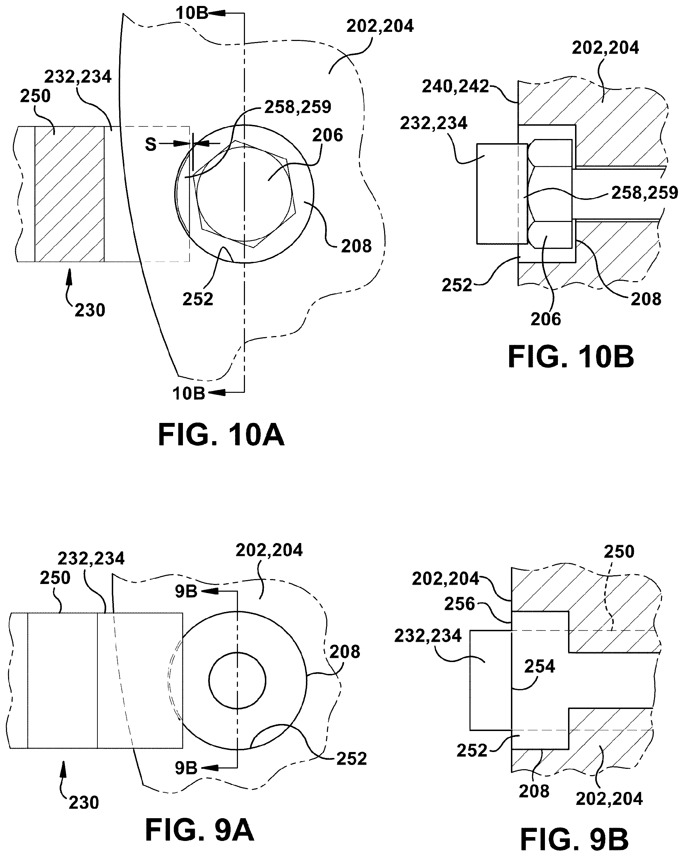

FIG. 9A shows an end view of engagement members 232, 234 of adjustable clamp 230 at axial ends 240, 242 and at a fastener opening 208, and FIG. 9B shows a cross-sectional view through the same fastener opening 208 (along view line 9B-9B in FIG. 9A), according to embodiments of the disclosure. In certain embodiments (shown in FIGS. 9A-B) each engagement member 232, 234 may have a planar surface 254 (FIG. 9B) that engages a planar surface 256 (FIG. 9B) of respective axial ends 240, 242, e.g., adjacent to but outside of fastener opening 208. Here, engagement member 232, 234 engages respective axial ends 240, 242 adjacent to but outside of respective fastener opening 208.

FIG. 10A shows an end view of engagement members 232, 234 of adjustable clamp 230 at axial ends 240, 242 and at a fastener opening 208, and FIG. 10B shows a cross-sectional view through the same fastener opening 208 along view line 10B-10B in FIG. 10A, according to other embodiments of the disclosure. In these other embodiments, first engagement member 232 may engage a portion of fastener opening 208 in turbine rotor flange 202 and second engagement member 234 may engage a portion of fastener opening 208 in load rotor flange 204. More particularly, as shown in FIGS. 8 and 10A-B, first engagement member 232 may include a first retention member 258 to engage a portion of circular inner surface 252 of fastener opening 208 in turbine rotor flange 202. Similarly, second engagement member 234 may include a second retention member 259 to engage a portion of circular inner surface 252 of fastener opening 208 in load rotor flange 204. Retention members 258, 259 may include any now known or later developed detent, extension, or protrusion capable of preventing engagement member 232, 234 from moving radially relative to the axis of turbine rotor 110 in a manner to disengage from a respective rotor flange 202, 204. In certain embodiments, retention members 258, 259 may be arcuate members having the same or similar radius of curvature as circular inner surface 252 of fastener opening 208. Each retention member 258, 259 can be customized for the particular circular inner surface 252 of fastener opening 208 to which it is to engage, e.g., where fastener openings 208 have different sizes in axial ends 240, 242 of rotor flange(s) 202, 204.

As described, load coupling 120 may include fasteners 206 in respective aligned fastener openings 208 of coupling turbine rotor flange 202 and load rotor flange 204. Regardless of the form of engagement members 232, 234, as shown in FIGS. 10A-B, first retention member 258 and second retention member 259 are configured to be radially between a portion of fastener 206, e.g., bolt head or nut thereof, and the respective portions of circular inner surfaces 252 of fastener openings 208. More particularly, each retention member 258, 259 fits within a space S (FIG. 10B) radially between a (radially outer) portion of fastener 206, such as but not limited to a hexagonal bolt head thereof or a hexagonal nut, and the respective portions of circular inner surface 252 of fastener openings 208 regardless of the fastener's rotational position. In this manner, tool 200 can be used regardless of whether fasteners 206 are present. The FIGS. 9A-B embodiment can also be used regardless of whether fasteners 206 are present.

Referring to FIGS. 3-5 and 8, each engagement element 220 also includes a dual-action linear actuator 260 (hereafter "actuator 260") coupled to adjustable clamp 230 and having an actuator end 262. Actuator 260 may include any now known or later developed linear actuator capable of applying force sufficient to axially move turbine rotor 110, perhaps with actuator(s) 260 of other engagement element(s) 220, in a first axial direction (e.g., forward) and a second, opposite axial direction (e.g. after) compared to the first axial direction. Actuator 260 can include, for example, hydraulic, pneumatic, electric, and/or other drive systems. Actuator 260 can be coupled to adjustable clamp 230 using any now known or later developed manner such as but not limited to a mounting block 264 coupled to body 250 of adjustable clamp, e.g., by fasteners, welds, etc. Actuator end 262 may be at an end of an actuator element 266 of actuator 260, e.g., a hydraulic ram, etc. As will be described, actuator end 262 may include any variety of features to assist in proper positioning and/or retention. For example, as shown in FIG. 8, actuator end 262 of actuator 260 may include a radially extending slot 268 therein. While radially extending slot 268 is shown extending an entirety of a circumferential extent of actuator end 262, it may be segmented and/or extend only partially circumferentially around actuator end 262. Although not necessary, actuator end 262 may also include any variety of linear stop elements 269.

Each engagement element 220 also includes a fixture 270 configured to axially fix actuator end 262 of actuator 260 to a stationary structure 272 adjacent turbine rotor 110. Referring to FIGS. 8, 11 and 12, fixture 270 includes a body 280 having a curved opening 282 defined therein. Body 280 of fixture 270 can be coupled to stationary structure 272 in any now known or later developed manner. In one example, fixture 270 is fixedly mounted to stationary structure 272 by a plurality of removable threaded fasteners 283. More particularly, body 280 may include holes 281 through which respective removable threaded fasteners 283 extend to threadedly couple to holes (not shown) in stationary structure 272. Other mechanisms to couple body 280 to stationary structure 272 may also be employed, e.g., welding, tongue/groove arrangements, bolting to other mounts for other structures, etc. Stationary structure 272 may take a variety of forms. In the example shown, stationary structure 272 includes lower half casing 170 of turbine 108 (FIGS. 1, 2) in which turbine rotor 110 operates. More particularly, stationary structure 272 may include an axially facing surface 274 of half casing 170 radially adjacent turbine rotor 110. In other examples, stationary structure 272 may include an axially facing surface (not shown) of half casing 170 that is more radially distant from turbine rotor 110, a part of an outer half casing (if present), or part of bearing housing 172. Any stationary structure capable of resisting the force applied by actuator 260 in both axial directions may be used.

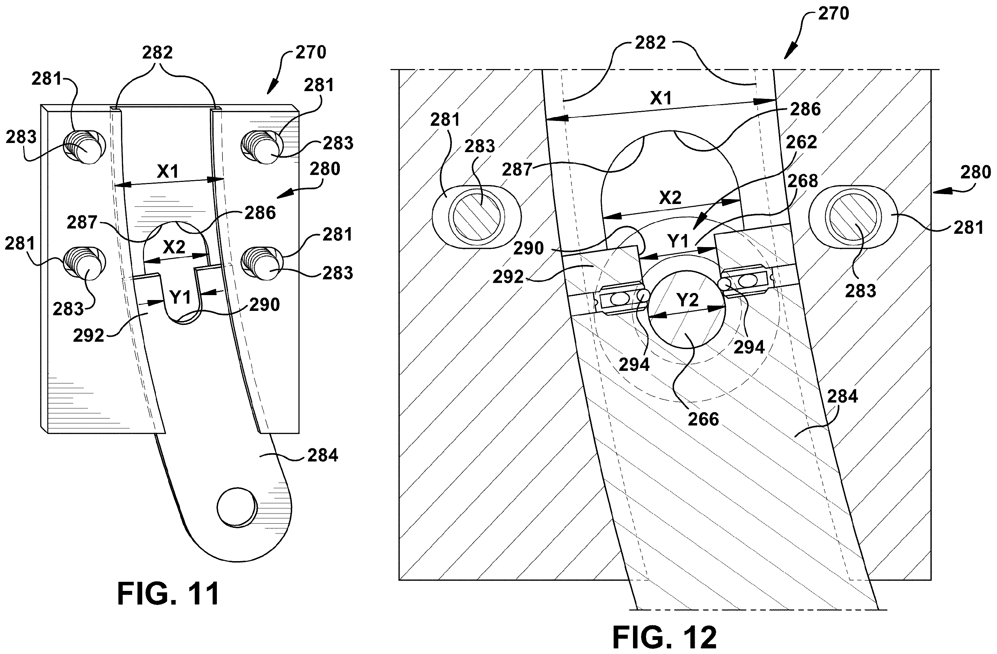

FIG. 11 shows a cross-sectional view of fixture 270 with a retention element 284 thereof, and FIG. 12 shows an enlarged cross-sectional view of fixture 270 and a curved opening 282 thereof with a retention element 284 therein, according to embodiments of the disclosure. Curved opening 282, as shown in FIGS. 8 and 11, may have a T-shaped cross-section that has a side-to-side dimension X1 (in arms of the T-shape) configured to receive a retention element 284 therein. Fixture 270 also has a curved slot 286 extending within or along curved opening 282. Slot 286 is curved along or within curved opening 282. Curved slot 286 has a side-to-side dimension X2 configured to receive actuator end 262 of actuator 260 therein, i.e., outside of radially extending slot 268. Retention element 284 of fixture 270 is slidable along curved opening 282 and axially retained by body 280. That is, when in curved opening 282, retention element 284 cannot move axially relative to stationary structure 272.

As shown in FIGS. 8, 11 and 12, retention element 284 may have the same center of radius of curvature as curved opening 282 to slide along an entirety of curved opening 282. Curved slot 286 within curved opening 282 has a closed end 287 that prevents actuator end 262 from exiting from that end, e.g., an upper end as shown. Retention element 284 is configured to engage actuator end 262 of actuator 260 to axially fix actuator end 262 of actuator 260 relative to stationary structure 272, i.e., within slot 286. More particularly, retention element 284 acts to close curved opening 282 and slot 286 at an opposing end thereof from closed end 287 of slot 286.

Retention element 284 also captures actuator end 262 within a length of curved opening 282. More particularly, retention element 284 includes a slot 290 (defined in an end 292 thereof) configured to engage actuator end 262, i.e., in (at least part of) radially extending slot 268 of actuator end 262, to axially fix actuator end 262 of actuator 260 relative to stationary structure 272. For example, as shown in FIG. 12, a width Y1 of slot 290 may be configured to engage/receive actuator element 266 at radially extending slot 268 having the same or slightly smaller dimension Y2. When slot 290 engages in at least part of radially extending slot 268 of actuator end 262, retention element 284 axially fixes actuator end 262 relative to stationary structure 272 such that an axial force (see FIGS. 5 and 14) applied by actuator 260 can move turbine rotor 110 in forward and rearward axial directions (see arrow sets 302, 304 in FIGS. 5 and 14). Actuator end 262 can be freed from stationary structure 272 by removing retention element 284 from curved opening 282 and sliding actuator end 262 out of slot 286.

Retention element 284 may be held in position with slot 290 thereof engaging in at least part of radially extending slot 268 of actuator end 262 in any now known or later developed manner. In certain embodiments, as shown in FIG. 12, retention element 284 may include at least one spring-loaded ball plunger 294 extending into slot 290 defined therein and configured to retain retention element 284 on actuator end 262, e.g., by engaging actuator element 266 within radially extending slot 268. In other arrangements, retention element 284 may include a threaded fastener that clamps or otherwise fixes its position along curved opening 282. Other mechanisms to retain retention element 284 on actuator end 262 in curved opening 282 may also be possible.

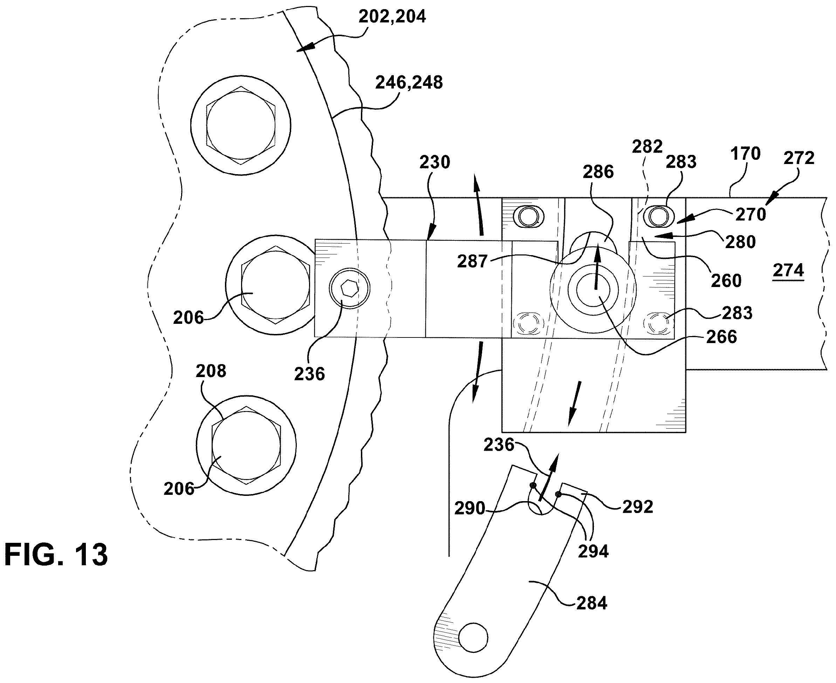

FIG. 13 shows an end view of load coupling 120 with engagement element 220 of tool 200 being installed according to embodiments of the disclosure. With reference to FIGS. 4 and 13, curved opening 282 and curved slot 286 of fixture 270 parallel circular outer surface 246, 248 of rotor flanges 202, 204 (and turbine rotor 110). That is, the centers of the radii of curvature of curved opening 282 of fixture 270 and circular outer surface 246, 248 of rotor flanges 202, 204 (and turbine rotor 110) are the same. Consequently, during mounting of engagement element(s) 220, actuator end 262 can be slidably moved along curved opening 282 until engagement members 232, 234 of adjustable clamp 230 are in a desired circumferential position to engage rotor flange(s) 202, 204 in any of the manners described previously herein. More particularly, during mounting, engagement element 220 can be circumferentially moved around rotor flange(s) 202, 204 to any circumferential location. As this occurs, actuator end 262 slidably moves along curved opening 282 and adjustable clamp 230 moves circumferentially around rotor flange(s) 202, 204 until reaching a location at which engagement members 232, 234 of adjustable clamp 230 can engage one or both rotor flange(s) 202, 204. Space adjuster 236 can then be adjusted to have engagement members 232, 234 engage rotor flange(s) 202, 204 in any of the manners described previously herein, e.g., with retention members 258, 259 engaging portion circular inner surfaces 252 of fastener openings 208. Retention element 284 can then be slid along curved opening until slot 290 thereof engaged radially extending slot 268 of actuator end 262 to axially fix actuator end 262 to stationary structure 272. Retention element 284 is retained on actuator end by, for example, spring-loaded ball plunger 294 or another retention mechanism.

As shown schematically in FIGS. 3-4 and 8, tool 200 also includes a controller 300 configured to activate actuator 260 of each engagement element 220 to axially move, i.e., thrust, turbine rotor 110. Controller 300 may include any now known or later developed industrial controller configured for the type of actuator 260 used, e.g., a hydraulic, pneumatic, and/or electric controller. Controller 300 may be computerized for more precise control. Controller 300 may move turbine rotor 110 between, as shown by arrow set 302 in FIG. 5, a first axial direction A1 and a second, opposite axial direction A2 to first axial direction A1. In this case, turbine rotor 110 moves between two axial positions. In other embodiments, as shown by arrow set 304 in FIG. 5, controller 300 may be configured to activate actuator 260 of each engagement element 220 to move turbine rotor 110 from a nominal (third) axial position N in the first axial direction A1 and back, and from the nominal axial position N to the second, opposite axial direction A2 to the first axial direction and back. The distance(s) that turbine rotor 110 is axially moved can be user defined but typically are no more than 0.635 millimeters (~0.025 inches). Any now known or later developed sensors 310 can be used to measure and/or verify a distance turbine rotor 110 is axially moved, such as but not limited to, dial indicators.

FIG. 14 shows a side view of tool 200 for performing rotor thrust test according to other embodiments of the disclosure. As noted, tool 200 can be applied to turbine rotor 110 using only turbine rotor flange 202 of load coupling 120, i.e., where load rotor 122 is removed or non-existent. In this case, the at least one coupling flange of load coupling 120 includes only turbine rotor flange 202 extending from turbine rotor 110. In an operative state of adjustable clamp 230, first engagement member 232 engages a first axial end 240 of turbine rotor flange 202 and second engagement member 234 engages a second axial end 242, also of turbine rotor flange 202. That is, engagement element(s) 220 are coupled to axial ends 240, 242 of turbine rotor flange 202 in a similar manner as described herein relative to FIGS. 9A-B and 10A-B. Operation of tool 200 is the same as described herein. In addition to the adjustability provided by adjustable clamp 230 and fixture 270, tool 200 can also include sets of different sized engagement elements 220, i.e., adjustable clamps 230 and/or fixtures 270, to accommodate different sized GT systems 100 (FIG. 1). For example, different engagement elements 220 may address different sized rotor flange(s) 202, 204 of load coupling 120, e.g., with different diameters, different axial extents and/or different axial ends 240, 242 such as different sized/positioned fastener openings 208 or fasteners 206. Different sized and/or arranged fixtures 270 can also be provided to address different stationary structures 272.

Embodiments of the disclosure provide various technical and commercial advantages, examples of which follow. The tool provides an easier, safe, and standardized way to perform a turbine rotor thrust clearance test. The tool enables the turbine rotor to be thrust in both forward and aft axial directions with the inlet casing installed, with either the upper half casing installed or removed, and with a single tool installed for numerous tests. The tool can be installed around both coupling flanges (turbine and load rotor flanges) of the load coupling, i.e., on turbine rotor and load rotor, while they are coupled. Hence, the tool eliminates the need to disassemble the load coupling or remove loading coupling fasteners. The tool is also adaptable to be used when the turbine rotor and the load rotor are uncoupled. The adjustable clamp allows use in any turbine rotor rotational position, eliminating the need to rotate the turbine rotor. The tool is compact and only requires one person to lift due to, for example, the small size and/or modularity of the tool features.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the claimed subject matter. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A tool (200) for thrust testing a first rotor, the tool comprising:
at least one rotor thrust engagement element (220), each rotor thrust engagement element including:
an adjustable clamp (230) including a first engagement member (232), a second engagement member (234) and a space adjuster (236) configured to adjust a distance (D) between the first engagement member and the second engagement member, wherein the first and second engagement members are configured to engage opposing axial ends of a load coupling (120), the load coupling comprising at least one coupling flange (202, 204) extending from at least the first rotor (110), the load coupling configured to couple the first rotor to a second rotor (122);
a dual-action linear actuator (260) coupled to the adjustable clamp (230) and having an actuator end (262); and
a fixture (270) configured to axially fix the actuator end of the dual-action linear actuator to a stationary structure (272) adjacent the first rotor (110); and
a controller (300) configured to activate the dual-action linear actuator of each rotor thrust engagement element to move the first rotor selectively in a first axial direction (A1) and in a second axial direction (A2) opposite to the first axial direction.

2. The tool of claim 1, wherein the at least one rotor thrust engagement element includes a plurality of rotor thrust engagement elements configured to be circumferentially spaced relative to the first rotor.

3. The tool of any preceding claim, wherein, the first engagement member (232) and the second engagement member (234) are configured such that, in an operative state of the adjustable clamp, the first engagement member engages an axial end of a turbine rotor flange (202) and the second engagement member engages an axial end of a load rotor flange (204) when the turbine rotor flange and the load rotor flange are coupled together to jointly form the load coupling (120).

4. The tool of any preceding claim, wherein the first engagement member (232) is configured to engage at least a portion of a fastener opening (208) in a turbine rotor flange (202) and the second engagement member is configured to engage at least a portion of a fastener opening (208) in a load rotor flange (204) when the turbine rotor flange and the load rotor flange are coupled together to jointly form the load coupling (120).

5. The tool of the preceding claim, wherein the first engagement member (232) includes a first retention member (258) configured to engage a portion of a circular inner surface (252) of the fastener opening in the turbine rotor flange (202) and the second engagement member (234) includes a second retention member (259) configured to engage a portion of a circular inner surface (252) of the fastener opening in the load rotor flange (204).

6. The tool of the preceding claim, wherein the first retention member (258) and the second retention member (259) are configured to be positioned radially between
- a portion of a fastener (206) inserted in aligned fastener openings in the turbine rotor flange (202) and the load rotor flange (204) and coupling the turbine rotor flange and the load rotor flange, and
- the respective portions of the circular inner surfaces (252) of the fastener openings.

7. The tool of any preceding claim, wherein the adjustable clamp is configured to extend around a radially outer facing surface of the at least one coupling flange of the load coupling (120).

8. The tool of any preceding claim, wherein the fixture (270) includes:
a body (280) having a curved opening (282) defined therein;
a curved slot (286) extending along the curved opening and configured to receive the actuator end (262) of the dual-action linear actuator (260); and
a retention element (284) slidable along the curved opening and axially retained by the body, the retention element including a slot (290) configured to engage the actuator end (262) of the dual-action linear actuator to axially fix the actuator end of the dual-action linear actuator relative to the stationary structure (272).

9. The tool of the preceding claim, wherein the curved opening (282) and the curved slot (286) extending along the curved opening of the fixture (270) are configured to extend parallel the a circular outer surface of the at least one coupling flange (202, 204) of the load coupling (120).

10. The tool of any of claims 8 or 9, wherein the actuator end (262) of the dual-action linear actuator (260) includes a radially extending slot (268) therein, and the slot (290) of the retention element (284) is configured to engage in the radially extending slot to axially fix the actuator end of the dual-action linear actuator relative to the stationary structure.

11. The tool of the preceding claim, wherein the retention element (284) includes at least one spring-loaded ball plunger (294) extending into the slot (290) defined therein and configured to retain the retention element on the actuator end (262) of the dual-action linear actuator (260).

12. The tool of any preceding claim, wherein the space adjuster (236) includes a threaded member (237) configured to linearly adjust the distance between the first engagement member and the second engagement member.

13. The tool of any preceding claim, wherein the controller (300) is further configured to activate the dual-action linear actuator (260) of each rotor engagement element (220) to move the turbine rotor (110) from a nominal axial position (N) in the first axial direction (A1) and back, and from the nominal axial position in the second axial direction (A2) opposite to the first axial direction and back.

14. The tool of any preceding claim, wherein the fixture (270) is configured to be fixedly mounted to the stationary structure (272) by a plurality of removable threaded fasteners (283).

15. The tool of any preceding claim, wherein the fixture (270) is configured to axially fix the actuator end (262) of the dual-action linear actuator (260) to a stationary structure (272) which includes a lower half casing (170) of a turbine (108) in which the turbine rotor (110) operates.
